(19) Europäisches Patentamt
European Patent Office
Office européen des brevets

(11) **EP 3 163 019 B1**

(12) **EUROPÄISCHE PATENTSCHRIFT**

(45) Veröffentlichungstag und Bekanntmachung des Hinweises auf die Patenterteilung:
**13.03.2019   Patentblatt 2019/11**

(51) Int Cl.:
*F01D 5/14* *(2006.01)*          *F01D 5/22* *(2006.01)*
*F01D 9/04* *(2006.01)*

(21) Anmeldenummer: **15191393.6**

(22) Anmeldetag: **26.10.2015**

(54) **LAUFSCHAUFEL**

ROTOR BLADE

AUBE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.05.2017   Patentblatt 2017/18**

(73) Patentinhaber: **MTU Aero Engines AG**
**80995 München (DE)**

(72) Erfinder:
• **Wolf, Kaspar**
  **81379 München (DE)**
• **Wittig, Klaus**
  **85244 Röhrmoos (DE)**
• **Wöhler, Marcus**
  **82266 Inning am Ammersee (DE)**
• **Pernleitner, Martin**
  **85221 Dachau (DE)**
• **Schütte, Wilfried**
  **82041 Oberhaching-Furth (DE)**

(56) Entgegenhaltungen:
**EP-A1- 0 661 413     EP-A1- 1 505 302**
**EP-A2- 2 226 468     WO-A1-2012/080669**

EP 3 163 019 B1

**Beschreibung**

Die vorliegende Erfindung betrifft eine Laufschaufel für eine Turbomaschine, eine Verdichter- oder Turbinenstufe einer Gasturbine mit wenigstens einer solchen Laufschaufel, eine Gasturbine, insbesondere eines Flugtriebwerks, mit wenigstens einer solchen Verdichter- oder Turbinenstufe sowie ein Verfahren zum Auslegen der Schaufel.

Schaufelblätter von Laufschaufeln dienen zur Strömungsumlenkung, insbesondere um, insbesondere in einer Turbinenstufe, einem Arbeitsfluid, insbesondere Abgas, Arbeit zu entziehen oder, insbesondere in einer Verdichterstufe, ein Arbeitsfluid, insbesondere angesaugte Luft, zu verdichten.

Ihre geometrische Kontur hat wesentlichen Einfluss auf die Belastung der Schaufel bzw. Stufe.

Die EP 2 226 468 A2 offenbart eine tanssonische Laufschaufel, bei der ein Bereich einer Stapelachse, die die Massenmittelpunkte von Querschnitten verbindet, in Hauptströmungsrichtung auf einer stromabwärtigen Seite eines Stapelzentrums angeordnet ist.

Aus der EP 1 505 302 A1 ist ein Verdichterschaufelblatt bekannt, bei ein eine Staffelung oberhalb eines Fußes ansteigt und oberhalb eines mittleren Bereich abnimmt.

Die WO 2012/080669 A1 offenbart eine Turbomaschinenschaufel, bei der eine Projektion einer Stapelachse auf eine Ebene senkrecht zu einer Sehne eine doppelte Umkehrung ihrer Krümmung auf den letzten 30% einer Höhe eines Schaufelblatts aufweist.

Eine Aufgabe einer Ausführung der vorliegenden Erfindung ist es daher, eine Turbomaschine, insbesondere eine Gasturbine, zu verbessern.

Diese Aufgabe wird durch eine Laufschaufel mit den Merkmalen des Anspruchs 1 bzw. ein Verfahren mit den Merkmalen des Anspruchs 9 gelöst. Ansprüche 6, 8 stellen eine Verdichter- oder Turbinenstufe mit einer oder mehreren hier beschriebenen Laufschaufeln bzw. eine Gasturbine mit wenigstens einer hier beschriebenen Verdichter- oder Turbinenstufe unter Schutz. Vorteilhafte Ausführungsformen der Erfindung sind Gegenstand der Unteransprüche.

Nach einem Aspekt der vorliegenden Erfindung weisen eine oder mehrere Laufschaufeln für eine, insbesondere einer, Turbomaschine, insbesondere für eine, insbesondere einer, Verdichter- oder Turbinenstufe für eine, insbesondere einer, Gasturbine, insbesondere für ein Flugtriebwerk, insbesondere eines Flugtriebwerks, jeweils ein Schaufelblatt zur Strömungsumlenkung mit einer Druck- und einer Saugseite auf, die durch eine Vorder- und Hinterkante verbunden sind.

Das Schaufelblatt kann in fachüblicher Weise durch eine Reihe von radial gestapelten Profilschnitten, insbesondere konzentrisch oder kegelförmig zu einer Dreh- bzw. Hauptmaschinenachse der Turbomaschine, aufgebaut bzw. definiert bzw. ausgelegt sein bzw. werden. Profilschnitte können beispielsweise, insbesondere modifizierte, NACA-Profile, Clarc-Profile, DCA-Profile ("Double Curcular Arc"), MCA-Profile ("Arches Multiple Circulars") oder auch andere Profile bzw. Konturen aufweisen.

Die Verbindungslinie der geometrischen Schwerpunkte der gestapelten Profilschnitte wird in fachüblicher Weise als sogenannte Stapel- bzw. Fädelachse des Schaufelblatts bezeichnet und definiert dessen radialen Verlauf.

In einer Ausführung der vorliegenden Erfindung weist die Stapelachse des Schaufelblattes in radialer Richtung (senkrecht zur Dreh- bzw. Hauptmaschinenachse der Turbomaschine) über einem Radius r von einem Schaufelblattfuß bei r = 0, insbesondere in einem radial innersten Profilschnitt des Schaufelblattes, zu einer Schaufelblattspitze bei r = H, insbesondere in einem radial äußersten Profilschnitt des Schaufelblattes,

- in einer ersten stromabwärtigen Richtung senkrecht zur radialen Richtung und parallel zur Hauptmaschinenachse der Turbomaschine einen Verlauf x(r) auf, der von einem Superpositionsverlauf $x_l(r) + x_s(r)$, welcher sich aus einer Addition eines , insbesondere positiven, linearen Verlaufs

$$x_l(r) = a_x \cdot (r/H + b_x)$$

und einer lokalen, insbesondere nur über eine Periode von Null verschieden definierten, Sinusfunktion

$$x_s(r) = \begin{cases} A \cdot \left[ \sin\left( B \cdot \left( \frac{r}{H} + C \right) \right) + 1 \right] \Leftrightarrow -\frac{\pi}{2} \leq B \cdot \left( \frac{r}{H} + C \right) \leq \frac{3 \cdot \pi}{2} \\ 0 \Leftrightarrow sonst \end{cases}$$

zusammensetzt, wenigstens in einem radialen Bereich zwischen r = 0,200·H und r = 0,400·H, insbesondere wenigstens in einem radialen Bereich zwischen r = 0,100·H und r = 0,500·H, insbesondere wenigstens in einem radialen Bereich zwischen r = 0,100·H und r = 0,750·H, um maximal 0,100·$a_x$·(1 + $b_x$), insbesondere um maximal 0,010·$a_x$·(1

+ $b_x$), abweicht; und

- in einer zweiten Richtung senkrecht zur radialen Richtung und der ersten Richtung einen Verlauf y(r) aufweist, der von einem, insbesondere negativen, linearen Verlauf

$$a_y \cdot (r/H + b_y)$$

wenigstens in dem radialen Bereich zwischen r = 0,200·H und r = 0,400·H, insbesondere wenigstens zwischen r = 0,100·H und r = 0,500·H, insbesondere wenigstens zwischen r = 0,100·H und r = 0,750·H, um maximal 0,100·$a_y$·(1 + $b_y$), insbesondere um maximal 0,010·$a_y$·(1 + $b_y$), abweicht.

Mit anderen Worten weisen die Schaufelblätter einer oder mehrerer Laufschaufeln wenigstens in dem angegebenen radial inneren Bereich zwischen r = 0,200·H und r = 0,400·H, insbesondere wenigstens zwischen r = 0,100·H und r = 0,500·H, insbesondere wenigstens zwischen r = 0,100·H und r = 0,750·H, einen, insbesondere positiven bzw. stromabwärtigen, sogenannten x-Lean bzw. Sweep in Richtung der Hauptmaschinenachse und einen, insbesondere negativen, sogenannten (y-)Lean in Umfangsrichtung auf, wobei der (y-)Lean wenigstens in dem angegebenen radial inneren Bereich von einem rein linearen Verlauf um höchstens 1%, insbesondere höchstens 0,1% eines Grenzwertes an der Schaufelblattspitze abweicht, und der x-Lean bzw. Sweep wenigstens in dem angegebenen radial inneren Bereich von einer Superposition eines rein linearen Verlaufs und einer einzigen vollen Periode einer überlagerten Sinusschwingung um höchstens 1%, insbesondere höchstens 0,1% eines Grenzwertes an der Schaufelblattspitze abweicht.

Durch den jeweils linearen Verlauf bzw. Anteil kann in einer Ausführung vorteilhaft eine Belastung des das Schaufelblatt tragenden bzw. stützenden Schaufelfußes durch an dem Schaufelblatt angreifende Fluid-, insbesondere Gaskräfte, vorteilhaft reduziert werden.

Durch die Kombination mit einer überlagerten Periode einer Sinusschwingung im x-Lean bzw. Sweep kann in einer Ausführung dabei vorteilhaft zugleich eine Belastung des Schaufelblatts durch diese Kräfte verbessert, insbesondere eine Belastung an der Vorderkante vorteilhaft reduziert werden.

Durch diese Kombination von x-Lean bzw. Sweep und (y-)Lean kann somit in einer Ausführung vorteilhaft eine Robustheit während des Betriebs, insbesondere gegen FODs, und/oder bei der Auslegung eine sogenannte Goodman Marge vergrößert werden.

Ein bzw. der radial innerste Profilschnitt ist in einer Ausführung der Schnitt des kleinsten, zur Hauptmaschinenachse konzentrischen Zylinders mit dem Schaufelblatt, der das Schaufelblatt in wenigstens einem Punkt, insbesondere erstmals vollständig, schneidet, ein bzw. der radial äußerste Profilschnitt entsprechend in einer Ausführung der Schnitt des größten, zur Hauptmaschinenachse konzentrischen Zylinders mit dem Schaufelblatt, der das Schaufelblatt in wenigstens einem Punkt, insbesondere noch vollständig, schneidet, die Schaufelblatthöhe entsprechend der radiale Abstand von dem radial innersten zu dem radial äußersten Profilschnitt.

In einer Ausführung gilt 0 < $a_x$. Dies wird auch als positiver linearer x-Lean- bzw. Sweep-Anteil bezeichnet, da die erste Richtung in Durchströmungsrichtung bzw. stromabwärts orientiert ist und somit nach radial außen der lineare x-Lean-Anteil in Durchströmungsrichtung zunimmt.

Zusätzlich oder alternativ gilt in einer Ausführung $a_y$ < 0. Dies wird auch als negativer (y-)Lean bezeichnet, wobei in einer Ausführung die erste Richtung, die zweite Richtung und die radiale Richtung vom Schaufelblattfuß zur Schaufelblattspitze in dieser Reihenfolge ein Rechtssystem bilden bzw. die radiale Richtung sich als Vektorprodukt der ersten und zweiten Richtung ergibt.

Durch einen solchen positiven x-Lean bzw. Sweep und/oder negativen (y-)Lean kann in einer Ausführung die Belastung des Schaufelfußes vorteilhaft reduziert werden.

In einer Ausführung gilt zusätzlich oder alternativ A < 0. In einer Ausführung wird die einperiodische Sinusfunktion dem linearen Anteil gegensinnig, insbesondere derart überlagert, dass sie den positiven x-Lean bzw. Sweep in dem Bereich, in dem sie von Null verschieden ist, reduziert.

Dadurch kann in einer Ausführung eine Belastung des Schaufelblatts verbessert, insbesondere eine Belastung an der Vorderkante vorteilhaft reduziert werden.

In einer Ausführung gilt 1,800·π ≤ B ≤ 2,200·π oder 6,300·π ≤ B ≤ 7,000·π. Mit anderen Worten erstreckt sich in einer Ausführung die Periode der überlagerten Sinusschwingung, wenigstens im Wesentlichen, über die gesamte Schaufelblatthöhe (B ≈ 2·π) oder etwa 30% der Schaufelblatthöhe (B ≈ 2·π/0,3 ≈ 6,7·π).

Es hat sich überraschend gezeigt, dass gerade diese Periodenbreiten die Belastung des Schaufelblatts vorteilhaft verbessern, insbesondere eine Belastung an der Vorderkante vorteilhaft reduzieren können.

In einer Ausführung gilt -0,300 ≤ C ≤ -0,200 oder -0,100 ≤ C ≤ -0,050. Allgemein ist in einer Ausführung, insbesondere dadurch, ein maximaler, insbesondere negativer, Wert der überlagerten Sinusschwingung bei etwa der Hälfte der Schaufelblatthöhe (vgl. $\sin(B(r/H - 0{,}25)) + 1 = \sin(0{,}25B) + 1 = \sin(0{,}5\cdot\pi) + 1 = 2$) oder etwa 15% der Schaufelblatthöhe (vgl. $\sin(B(r/H - 0{,}075)) + 1 = \sin(0{,}075B) + 1 = \sin(0{,}5\cdot\pi) + 1 = 2$) angeordnet, wobei zu beachten ist, dass die überlagerte Sinusschwingung aufgrund der Verschiebung "$(\sin(...) + 1)$" bei Null beginnt und betragsmäßig auf maximal $2(\cdot A)$ ansteigt.

Es hat sich überraschend gezeigt, dass gerade diese Verortung der Sinusperiode die Belastung des Schaufelblatts vorteilhaft verbessern, insbesondere eine Belastung an der Vorderkante vorteilhaft reduzieren kann.

In einer Ausführung gilt $a_x \leq 0{,}036\cdot H$, insbesondere $a_x \leq 0{,}018\cdot H$, und/oder $-0{,}100 \leq b_x \leq 0{,}100$, insbesondere $-0{,}050 \leq b_x \leq 0{,}050$. Beträgt beispielsweise in einer Ausführung die Schaufelblatthöhe H etwa 167 mm, so beträgt entsprechend in einer Ausführung der lineare Anteil des x-Leans bzw. Sweeps an der Schaufelblattspitze für $b_x = 0$ etwa $0{,}036 \cdot 167$ mm $\approx 6{,}01$ mm, insbesondere $0{,}018 \cdot 167$ mm $\approx 3{,}01$ mm.

Zusätzlich oder alternativ gilt in einer Ausführung $-0{,}006\cdot H \leq a_y$, insbesondere $-0{,}003\cdot H \leq a_y$, und/oder $-0{,}100 \leq b_y \leq 0{,}100$, insbesondere $-0{,}050 \leq b_y \leq 0{,}050$. Beträgt beispielsweise in einer Ausführung die Schaufelblatthöhe H etwa 167 mm, so beträgt entsprechend in einer Ausführung der lineare (y-)Lean an der Schaufelblattspitze für $b_y = 0$ etwa $-0{,}006\cdot 167$ mm $\approx -1{,}00$ mm, insbesondere $-0{,}003\cdot 167$ mm $\approx -0{,}5$ mm.

Es hat sich überraschend gezeigt, dass gerade diese linearen Verläufe bzw. Anteile die Belastung des Schaufelblatts vorteilhaft verbessern, insbesondere eine Belastung an der Vorderkante vorteilhaft reduzieren können.

In einer Ausführung gilt $-0{,}005\cdot H \leq A$, insbesondere $-0{,}003\cdot H \leq A$. Beträgt beispielsweise in einer Ausführung die Schaufelblatthöhe H etwa 167 mm, so beträgt entsprechend in einer Ausführung der maximale Wert des Sinusanteils des x-Leans bzw. Sweeps $-0{,}005\cdot 167$ mm$\cdot 2 \approx -1{,}67$ mm, insbesondere $-0{,}0022\cdot 167$ mm$\cdot 2 \approx -0{,}73$ mm. Es hat sich überraschend gezeigt, dass gerade diese Größen die Belastung des Schaufelblatts vorteilhaft verbessern, insbesondere eine Belastung an der Vorderkante vorteilhaft reduzieren können.

In einer Ausführung beträgt die radiale Schaufelblatthöhe H zwischen 150 mm und 200 mm. Es hat sich überraschend gezeigt, dass sich gerade bei solchen Schaufelblatthöhen vorteilhafte Schaufeln ergeben.

In einer Ausführung weist bzw. weisen die Schaufel(n) an der Schaufelblattspitze (jeweils) ein Deckband auf. Es hat sich überraschend gezeigt, dass gerade bei (Außen)Deckbändern erfindungsgemäße Schaufelblätter zu vorteilhaften Belastungen führen.

In einer Ausführung ist bzw. sind die Schaufel(n) (eine) Laufschaufel(n) für eine, insbesondere einer, insbesondere axialen, Verdichter- oder Turbinenstufe für eine, insbesondere einer, Gasturbine, insbesondere für ein Flugtriebwerk, insbesondere eines Flugtriebwerks.

In einer Weiterbildung ist bzw. sind die Stufe bzw. Schaufel(n) von einer strömungsaufwärtigsten bzw. ersten und/oder einer stromabwärtigstens bzw. letzten Stufe bzw. Laufschaufel des Verdichters bzw. der Turbine beabstandet. Mit anderen Worten kann die Laufschaufel bzw. Stufe insbesondere eine mittlere Laufschaufel bzw. Stufe sein, beispielsweise eine dritte (in Durchströmungsrichtung). Es hat sich überraschend gezeigt, dass erfindungsgemäße Schaufelblätter gerade hier besonders vorteilhaft sind.

In einer Ausführung ist bzw. wird die Laufschaufel lösbar an einem Rotor befestigt, beispielsweise mittels eines Tannenbaumfußes. Es hat sich überraschend gezeigt, dass erfindungsgemäße Schaufelblätter gerade hier besonders vorteilhaft sind.

In einer Ausführung ist bzw. wird eine Laufschaufel in der hier beschriebenen Weise ausgelegt, insbesondere, indem für den x-Lean bzw. Sweep zunächst die lokale Sinusfunktion und anschließend der lineare Verlauf bzw. Anteil ausgelegt wird.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:

Fig. 1     eine Laufschaufel einer Turbomaschine nach einer Ausführung der vorliegenden Erfindung in einer Draufsicht in Richtung einer zweiten Richtung; und

Fig. 2     den Verlauf der Stapelachse des Schaufelblatts der Laufschaufel in einer ersten und in der zweiten Richtung.

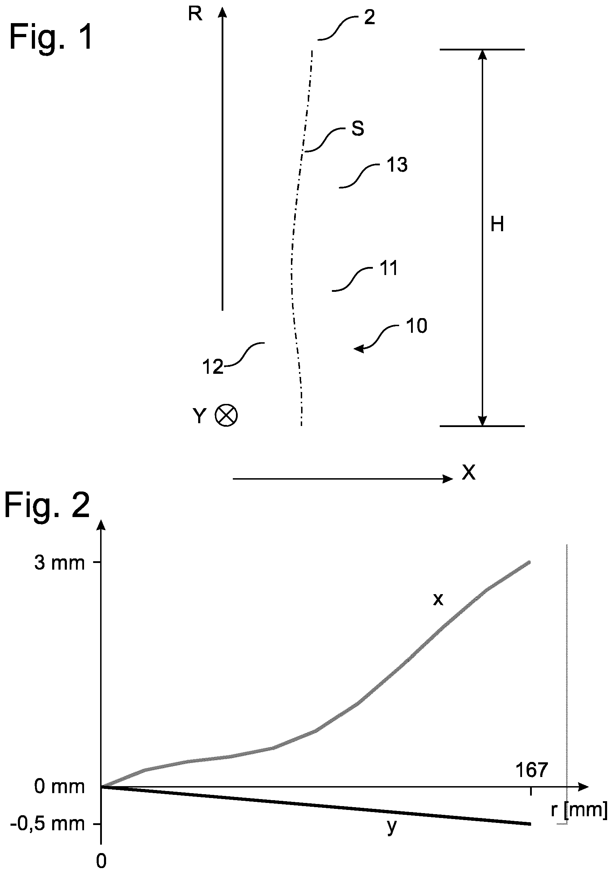

Fig. 1 zeigt eine Laufschaufel einer Turbomaschine nach einer Ausführung der vorliegenden Erfindung in einer Ansicht parallel zu einer radialen Richtung R und einer ersten Richtung X parallel zu einer Hauptmaschinenachse der Turbomaschine (horizontal in Fig. 1).

Die Laufschaufel weist ein Schaufelblatt 10 mit einer Saugseite 11 und einer in der Ansicht der Fig. 1 nicht sichtbaren Druckseite, die durch eine stromaufwärtige Vorderkante 12 und eine stromabwärtige Hinterkante 13 verbunden sind, sowie an der Schaufelblattspitze ein Deckband 2 auf.

Fig. 2 zeigt den Verlauf einer in Fig. 1 strichpunktiert angedeuteten Stapelachse S des Schaufelblatts 10 in der ersten Richtung X (Fig. 2: "x") und in einer zweiten Richtung Y (Fig. 2: "y"), wobei die erste Richtung X, zweite Richtung Y und die radiale Richtung R in dieser Reihenfolge ein Rechtssystem bilden, d.h. die zweite Richtung Y senkrecht in die Zeichenebene der Fig. 1 hineinzeigt.

Man erkennt in Fig. 2, dass das Schaufelblatt im Ausführungsbeispiel über seiner Schaufelblatthöhe H, d.h.

zwischen r/H = 0 und r/H = 1, einen negativen linearen (y-)Lean aufweist, der bei r = 0 mm 0 mm und bei r = H = 167 mm -0,5 mm beträgt. Der x-Lean bzw. Sweep in der ersten Richtung setzt sich hingegen aus einem positiven linearen Anteil, der bei r = 0 mm 0 mm und bei r = H = 167 mm 3 mm beträgt, und einer lokalen Sinusfunktion zusammen, die genau eine volle Periode aufweist, wobei die Periode etwa der Schaufelblatthöhe entspricht und die lokale Sinusfunktion an Schaufelblattfuß (unten in Fig. 1) und Schaufelblattspitze (oben in Fig. 1) gleich Null ist und etwa bei der Hälfte der Schaufelblatthöhe einen maximalen negativen Wert von -0,75 mm aufweist.

In einer nicht dargestellten Abwandlung kann beispielsweise die lokale Sinusfunktion in einem radialen Bereich zwischen etwa r/H = 0 und r/H = 0,3 von Null verschieden sein und eine volle Periode aufweisen, wobei der maximale negative Wert von beispielsweise -1 mm bei etwa r/H = 0,15 liegen kann.

Obwohl im Ausführungsbeispiel die Stapelachse S des Schaufelblatts 10 im gesamten radialen Bereich r/H = [0, 1] in der zweiten Richtung Y von dem linearen Verlauf y bzw. in der ersten Richtung X von dem Superpositionsverlauf x nicht oder nur geringfügig abweicht, kann sie in einer Abwandlung insbesondere in dem Bereich r/H < 0,1 und/oder r/H > 0,75 auch einen anderen Verlauf aufweisen.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

1 Schaufelblatt
11 Saugseite
12 Vorderkante
13 Hinterkante
2 Deckband

H Schaufelblatthöhe
R radiale Richtung
S Stapelachse
X erste Richtung
Y zweite Richtung

**Patentansprüche**

1. Laufschaufel für eine Turbomaschine, insbesondere eine Verdichter- oder Turbinenstufe einer Gasturbine, insbesondere eines Flugtriebwerks, mit einem Schaufelblatt (10) zur Strömungsumlenkung mit einer Druck- und einer Saugseite (11), die durch eine Vorder- und Hinterkante (12, 13) verbunden sind, wobei eine Stapelachse (S) des Schaufelblattes (10) in radialer Richtung (R) über einem Radius r von einem Schaufelblattfuß bei r = 0 zu einer Schaufelblattspitze bei r = H

• in einer ersten stromabwärtigen Richtung (X) senkrecht zur radialen Richtung (R) und parallel zu einer Hauptmaschinenachse der Turbomaschine einen Verlauf x(r) aufweist, der von einem Superpositionsverlauf $x_l(r) + x_s(r)$, welcher sich aus einer Addition eines, insbesondere positiven, linearen Verlaufs $x_l(r) = a_x \cdot (r/H + b_x)$ und

einer lokalen Sinusfunktion $x_s(r) = \begin{cases} A \cdot \left[ \sin\left( B \cdot \left( \dfrac{r}{H} + C \right) \right) + 1 \right] \Leftrightarrow -\dfrac{\pi}{2} \leq B \cdot \left( \dfrac{r}{H} + C \right) \leq \dfrac{3 \cdot \pi}{2} \\ 0 \Leftrightarrow sonst \end{cases}$ zusammensetzt, wenigstens in einem radialen Bereich zwischen r = 0,200·H und r = 0,400·H um maximal 0,100·$a_x$·(1 + $b_x$) abweicht; und

• in einer zweiten Richtung (Y) senkrecht zur radialen Richtung (R) und der ersten Richtung (X) einen Verlauf y(r) aufweist, der von einem, insbesondere negativen, linearen Verlauf $a_y \cdot (r/H + b_y)$ wenigstens in dem radialen Bereich zwischen r = 0,200·H und r = 0,400·H um maximal 0,100·$a_y$·(1 + $b_y$) abweicht, wobei gilt:

A < 0; und
1,800·$\pi$ ≤ B ≤ 2,200·$\pi$ oder 6,300·$\pi$ ≤ B ≤ 7,000·$\pi$; und
-0,300 ≤ C ≤ -0,200 oder -0,100 ≤ C ≤ -0,050; und
0 < $a_x$; und
$a_y$ < 0,
$a_x$ ≤ 0,036·H; und
-0,100 ≤ $b_x$ ≤ 0,100; und
-0,006·H ≤ $a_y$; und
-0,100 ≤ $b_y$ ≤ 0,100; und
-0,005·H ≤ A.

2. Laufschaufel nach einem der vorhergehenden Ansprüche, **dadurch gekennzeichnet, dass** die radiale Schaufelblatthöhe H zwischen 150 mm und 200 mm beträgt.

3. Laufschaufel nach einem der vorhergehenden Ansprüche, **dadurch gekennzeichnet, dass** die Schaufel an der Schaufelblattspitze ein Deckband (2) aufweist.

4. Verdichter- oder Turbinenstufe einer Gasturbine, insbesondere eines Flugtriebwerks, mit wenigstens einer Laufschaufel nach einem der vorhergehenden Ansprüche.

5. Verdichter- oder Turbinenstufe nach dem vorhergehenden Anspruch, **dadurch gekennzeichnet, dass** die Laufschaufel lösbar an einem Rotor befestigt ist.

6. Gasturbine, insbesondere eines Flugtriebwerks, mit wenigstens einer Verdichter- oder Turbinenstufe nach dem vorhergehenden Anspruch.

7. Verfahren zum Auslegen wenigstens einer Laufschaufel nach einem der vorhergehenden Ansprüche.

**Claims**

1. Rotor blade for a turbomachine, in particular a compressor or turbine stage of a gas turbine, in particular of an aircraft engine, comprising an airfoil (10) for flow deflection having a pressure side and a suction side (11) that are connected by a front and rear edge (12, 13), wherein a stacking axis (S) of the airfoil (10), in the radial direction (R) over a radius r from an airfoil base where r = 0 to an airfoil tip where r = H,

   • has, in a first downstream direction (X) perpendicularly to the radial direction (R) and in parallel with a main machine axis of the turbomachine, a curve x(r) which deviates from a superposition curve $x_l(r) + x_s(r)$ that is composed of an addition of an in particular positive linear curve $x_l(r) = a_x·(r/H + b_x)$ and a local sine function

$$x_s(r) = \begin{cases} A \cdot \left[ \sin\left( B \cdot \left( \dfrac{r}{H} + C \right) \right) + 1 \right] & \Leftrightarrow -\dfrac{\pi}{2} \leq B \cdot \left( \dfrac{r}{H} + C \right) \leq \dfrac{3 \cdot \pi}{2} \\ 0 & \Leftrightarrow \text{otherwise} \end{cases}$$

   at least in a radial range between r = 0.200·H and r = 0.400·H by at most 0.100·$a_x$·(1 + $b_x$); and
   • has, in a second direction (Y) perpendicularly to the radial direction (R) and the first direction (X), a curve y(r) which deviates from an in particular negative linear curve $a_y·(r/H + b_y)$ at least in the radial range between r = 0.200·H and r = 0.400·H by at most 0.100·$a_y$·(1 + $b_y$), wherein the following applies:

   A < 0; and
   1.800 · $\pi$ ≤ B ≤ 2.200 · $\pi$ or 6.300 · $\pi$ ≤ B ≤ 7.000 · $\pi$; and
   -0.300 ≤ C ≤ -0.200 or -0.100 ≤ C ≤ -0.050; and
   0 < $a_x$; and
   $a_y$ < 0,

$a_x \leq 0.036 \cdot H$; and
$-0.100 \leq b_x \leq 0.100$; and
$-0.006 \cdot H \leq a_y$; and
$-0.100 \leq b_y \leq 0.100$; and
$-0.005 \cdot H \leq A$.

2. Rotor blade according to any of the preceding claims, **characterized in that** the radial airfoil height H is between 150 mm and 200 mm.

3. Rotor blade according to any of the preceding claims, **characterized in that** the blade has a shroud (2) at the airfoil tip.

4. Compressor or turbine stage of a gas turbine, in particular of an aircraft engine, comprising at least one rotor blade according to any of the preceding claims.

5. Compressor or turbine stage according to the preceding claim, **characterized in that** the rotor blade is detachably fastened to a rotor.

6. Gas turbine, in particular of an aircraft engine, comprising at least one compressor or turbine stage according to the preceding claim.

7. Method for designing at least one rotor blade according to any of the preceding claims.

**Revendications**

1. Aube mobile pour une turbomachine, en particulier un étage de compression ou de turbine d'une turbine à gaz, en particulier d'un moteur d'avion, comprenant une pale (10) pour la déviation d'écoulement comprenant un côté de pression et un côté d'aspiration (11) qui sont connectés par les bords avant et arrière (12, 13), un axe d'empilage (S) de la pale (10) présentant, sur un rayon r allant d'un pied de pale à r = 0 jusqu'à une pointe de pale à r = H dans la direction radiale (R),

   • un tracé x(r), dans une première direction aval (X) perpendiculaire à la direction radiale (R) et parallèle à un axe de machine principal de la turbomachine, qui dévie au moins dans une zone radiale entre r = 0,200 H et r = 0,400 H d'au maximum $0,100 \cdot a_x \cdot (1 + b_x)$ d'un tracé de superposition $x_l(r) + x_s(r)$, lequel se compose de l'addition d'un tracé linéaire, en particulier positif, $x_l(r) = a_x \cdot (r/H + b_x)$ et d'une fonction sinusoïdale locale ;

$$x_s(r) = \begin{cases} A \cdot \left[ \sin\left( B \cdot \left( \dfrac{r}{H} + C \right) \right) + 1 \right] & \Leftrightarrow -\dfrac{\pi}{2} \leq B \cdot \left( \dfrac{r}{H} + C \right) \leq \dfrac{3 \cdot \pi}{2} \\ 0 & \Leftrightarrow \text{autrement} \end{cases}$$

   et
   • un tracé y(r), dans une deuxième direction (Y) perpendiculaire à la direction radiale (R) et à la première direction (X), qui dévie au moins dans la zone radiale entre r = 0,200 H et r = 0,400 H d'au maximum $0,100 \cdot a_y \cdot (1 + b_y)$ d'un tracé linéaire, en particulier négatif, $a_y \cdot (r/H + b_y)$, avec :

   $A < 0$ ; et
   $1,800 \cdot \pi \leq B \leq 2,200 \cdot \pi$ ou $6,300 \cdot \pi \leq B \leq 7,000 \cdot \pi$ ; et
   $-0,300 \leq C \leq -0,200$ ou $-0,100 \leq C \leq -0,050$ ; et
   $0 < a_x$ ; et
   $a_y < 0$,
   $a_x \leq 0,036 \cdot H$ ; et
   $-0,100 \leq b_x \leq 0,100$ ; et
   $-0,006 \cdot H \leq a_y$ ; et
   $-0,100 \leq b_y \leq 0,100$ ; et
   $-0,005 \cdot H \leq A$.

**2.** Aube mobile selon l'une quelconque des revendications précédentes, **caractérisée en ce que** la hauteur radiale de pale est comprise entre 150 mm et 200 mm.

**3.** Aube mobile selon l'une quelconque des revendications précédentes, **caractérisée en ce que** l'aube présente un carénage (2) à la pointe de la pale.

**4.** Étage de compression ou de turbine d'une turbine à gaz, en particulier d'un moteur d'avion, comprenant au moins une aube mobile selon l'une quelconque des revendications précédentes.

**5.** Étage de compression ou de turbine selon la revendication précédente, **caractérisé en ce que** l'aube mobile est montée de façon amovible sur un rotor.

**6.** Turbine à gaz, en particulier d'un moteur d'avion, comprenant au moins un étage de compression ou de turbine selon la revendication précédente.

**7.** Procédé pour le dimensionnement d'une aube mobile selon l'une quelconque des revendications précédentes.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2226468 A2
- EP 1505302 A1

- WO 2012080669 A1